# EUROPÄISCHE PATENTANMELDUNG

(11) **EP 3 722 815 A2**
(43) Veröffentlichungstag der Anmeldung: **14.10.2020**
(21) Anmeldenummer: 19208440.8
(22) Anmeldetag: 12.11.2019
(51) Int. Cl.: G01P 3/49, G01L 3/10, B62J 45/40, B62M 6/50, G01P 13/04, B62J 45/411, B62J 45/412, B62J 45/413, B62J 45/421

(54) **DREHWERTERFASSUNGSEINRICHTUNG, ANTRIEB UND ARBEITSVORRICHTUNG**

(30) Priorität: 28.11.2018 DE 102018220387
(71) Anmelder: Robert Bosch GmbH, 70442 Stuttgart (DE)
(72) Erfinder: Dukart, Anton, 70839 Gerlingen (DE); Hinterkausen, Markus, 71696 Moeglingen (DE)

(57) **Zusammenfassung**

Die vorliegende Erfindung betrifft eine Drehwerterfassungseinrichtung (100), welche eingerichtet ist, als Drehrichtung-, Drehwinkel- und/oder Drehzahlerfassungseinrichtung eine Drehrichtung, einen Drehwinkel und/oder eine Drehzahl einer Welle (15) und insbesondere einer Kurbelwelle (15) einer mit Muskelkraft und/oder oder mit Motorkraft antreibbaren Arbeitsvorrichtung und insbesondere eines Fahrzeugs (1) um eine Rotationsachse (Y) berührungslos zu erfassen, mit (i) einem Wirbelstromelement (20), in welchem von einer Drehrichtung, einem Drehwinkel und/oder einer Drehzahl der Welle (15) abhängige elektrische Wirbelströme generierbar sind, und mit (ii) einer Wirbelstromsensoreinheit (50) zur Erfassung von im Wirbelstromelement (20) generierten elektrischen Wirbelströmen.

## Beschreibung

### Stand der Technik

Die vorliegende Erfindung betrifft eine Drehwerterfassungseinrichtung, einen Antrieb und eine Arbeitsvorrichtung, insbesondere ein Fahrzeug. Die vorliegende Erfindung betrifft insbesondere eine Drehrichtungs-, Drehwinkel- und/oder Drehzahlerfassungseinrichtung in Bezug auf eine Welle sowie eine Drehmomenterfassungseinrichtung zur Erfassung eines auf die Welle und insbesondere auf eine Kurbelwelle einer mit Muskelkraft und/oder mit Motorkraft antreibbaren Arbeitseinrichtung, insbesondere eines Fahrzeuges, Fahrrades, Elektrofahrrades, eBikes, Pedelecs oder dergleichen, entlang einer Rotationsachse wirkenden Drehmomentes, einen Antrieb für eine mit Muskelkraft und/oder mit Motorkraft antreibbare Arbeitsvorrichtung, insbesondere eine Arbeitsvorrichtung, ein Fahrrad, Elektrofahrrad, eBike, Pedelec oder dergleichen, und eine mit Muskelkraft und/oder mit Motorkraft antreibbare Arbeitsvorrichtung, ein Fahrzeug, Fahrrad, Elektrofahrrad, eBike, Pedelec oder dergleichen.

Bei der Überwachung und/oder Steuerung von Antriebseinrichtungen, zum Beispiel im Bereich der Fahrzeugtechnik, ist es oft wünschenswert, einen Drehwert in Bezug auf eine Welle einer Antriebseinheit zu erfassen, zum Beispiel eine Drehrichtung, einen Drehwinkel, Drehzahl und/oder ein auf die Welle wirkendes Drehmoment.

Mit der in der DE 10 2016 210 385 A1 vorgestellten Einrichtung zum Erfassen eines Drehmoments ist zwar ein auf eine Welle wirkendes Drehmoment ohne aufwendige materielle Modifikation der Welle möglich. Jedoch können mit dem bekannten Vorgehen eine Drehrichtung, ein Drehwinkel und/oder eine Drehzahl nicht ohne weiteres ermittelt werden. Ferner stellt das bekannte Vorgehen Anforderungen an den erforderlichen Bauraum.

### Offenbarung der Erfindung

Die erfindungsgemäße Drehwerterfassungseinrichtung mit den Merkmalen des unabhängigen Anspruches 1 weist demgegenüber den Vorteil auf, dass bei einem vergleichsweise geringen Bauraum eine Drehrichtung, ein Drehwinkel und/oder eine Drehzahl einer Welle eines Antriebs mit hoher Zuverlässigkeit bestimmt werden können. Dies wird erfindungsgemäß mit den Merkmalen des unabhängigen Anspruches 1 dadurch erreicht, dass eine Drehwerterfassungseinrichtung geschaffen wird, welche eingerichtet ist, als Drehrichtung-, Drehwinkel- und/oder Drehzahlerfassungseinrichtung eine Drehrichtung, einen Drehwinkel und/oder eine Drehzahl einer Welle und insbesondere einer Kurbelwelle einer mit Muskelkraft und/oder oder mit Motorkraft antreibbaren Arbeitsvorrichtung und insbesondere eines Fahrzeugs um eine Rotationsachse berührungslos zu erfassen. Die erfindungsgemäße Einrichtung ist ausgebildet ist mit (i) einem Wirbelstromelement, in welchem von einer Drehrichtung, einem Drehwinkel und/oder einer Drehzahl der Welle abhängige elektrische Wirbelströme generierbar sind, und mit (ii) einer Wirbelstromsensoreinheit zur Erfassung von im Wirbelstromelement generierten elektrischen Wirbelströmen. Das Messprinzip des Nachweises von elektrischen Wirbelströmen in einem vorgesehenen Wirbelstromelement ermöglicht den Rückschluss auf eine Drehrichtung, einen Drehwinkel und/oder eine Drehzahl der zu Grunde liegenden Welle mit vergleichsweise geringem apparativen Aufwand bei hoher Zuverlässigkeit und reduziertem Bauraum der eingesetzten messenden Komponenten.

Die Unteransprüche zeigen bevorzugte Weiterbildungen der Erfindung.

Das Wirbelstromelement ist vorteilhafterweise bei einer Ausgestaltungsform der erfindungsgemäßen Drehwerterfassungseinrichtung drehfest mit der Welle, mechanisch zwischen einer Antriebsseite und einer Abtriebsseite der Welle und/oder eines Torsionselements der Welle und/oder drehfest mit dem Torsionselement koppelbar oder gekoppelt. Auf diese Art und Weise ist es gerade im Zusammenhang mit einem vorgesehenen Torsionselement möglich, neben einer Drehrichtung, einem Drehwinkel und/oder einer Drehzahl der Welle aufgrund des Vorhandenseins eines Torsionselements auch ein auf die Welle wirkendes Drehmoment zu erfassen.

Grundsätzlich sind sämtliche Ausgestaltungen für ein Wirbelstromelement denkbar, welche geeignet sind, aufgrund unterschiedlicher Wirbelströme eine Bewegung der zu Grunde liegenden Welle hinsichtlich einer Drehrichtung, eines Drehwinkels und/oder einer Drehzahl zu diskriminieren.

So ist es gemäß einer bevorzugten Ausgestaltungsform der erfindungsgemäßen Drehwerterfassungseinrichtung vorgesehen, dass das Wirbelstromelement in Bezug auf die Rotationsachse der zu Grunde liegenden Welle in Umfangsrichtung oder Tangentialrichtung eine Abfolge materieller Bereiche zur Erzeugung elektrischer Wirbelströme aufweist.

In vorteilhafter Weise können die materiellen Bereiche zur Erzeugung elektrischer Wirbelströme an sich unterschiedlich und/oder zur Erzeugung unterschiedlicher elektrischer Wirbelströme ausgebildet sein. Dies kann zum Beispiel erreicht werden, indem die materiellen Bereiche geometrisch und/oder materiell unterschiedlich ausgestaltet sind.

Zum Beispiel können die materiellen Bereiche als ein oder mehrere diskrete materielle Abschnitte, Stege, Schlitze und/oder Ausnehmungen in einem vorhandenen Material ausgebildet sein.

Alternativ oder zusätzlich können die materiellen Bereiche als ein oder mehrere in Umfangsrichtung angeordnete und/oder kontinuierlich verlaufende materielle Abschnitte ausgebildet sein.

Ferner ist es denkbar, dass die materiellen Bereiche als ein oder mehrere sich in ihrer Geometrie in Bezug auf die Richtung der Rotationsachse der zu Grunde liegenden Welle in Umfangsrichtung, in axialer Richtung und/oder in radialer Richtung - insbesondere kontinuierlich - ändernde materielle Abschnitte ausgebildet sind.

Bei einer anderen vorteilhaften Weiterbildung der erfindungsgemäßen Drehwerterfassungseinrichtung ist es vorgesehen, dass die materiellen Bereiche als ein oder mehrere sich in ihrer materiellen Zusammensetzung in Umfangsrichtung, in axialer Richtung und/oder in radialer Richtung - insbesondere kontinuierlich - ändernde materielle Abschnitte ausgebildet sind.

Bei einem anderen Ausführungsbeispiel können die materiellen Bereiche als ein oder mehrere keilförmigen Abschnitte ausgebildet sein, deren laterale Ausdehnung in axialer Richtung in Bezug auf die Richtung der Rotationsachse der zu Grunde liegenden Welle sich in Umfangsrichtung diskret, kontinuierlich und/oder abschnittsweise kontinuierlich ändert.

Neben den einzelnen materiellen Bereichen, durch welche konkret Wirbelströme erzeugbar sind, bieten sich auch für die Ausgestaltung des jeweiligen Wirbelstromelements insgesamt unterschiedliche Ausgestaltungsformen an, solange gewährleistet wird, dass durch die Analyse der Wirbelströme ein entsprechender Drehwert der zu Grunde liegenden Welle abgeleitet werden kann.

Zum Beispiel ist es denkbar, dass gemäß einem anderen Ausführungsbeispiel der erfindungsgemäßen Drehwerterfassungseinrichtung das Wirbelstromelement eine Scheibe und/oder eine Kreisscheibe ist oder aufweist.

Dabei kann eine Scheibe, welche dem Wirbelstromelement zu Grunde liegt, konzentrisch und koaxial zur zu Grunde liegenden Welle angeordnet sein. Auf diese Weise lassen sich mit besonders einfachen Mitteln Rückschlüsse auf einen Drehwert der Welle, nämlich im Sinne einer Drehrichtung, eines Drehwinkels und/oder einer Drehzahl, ziehen.

Ferner kann die einem Wirbelstromelement zu Grunde liegende Scheibe für eine besonders einfache materielle Ausgestaltung mit oder aus einem elektrisch leitfähigen Material, einem metallischen Material, einem Metall, Aluminium und/oder Kupfer gebildet sein.

Dabei kann die dem Wirbelstromelement zu Grunde liegende Scheibe zum Beispiel als eine erste Schlitzscheibe mit Schlitzen und Stegen ausgebildet sein oder werden.

Im Hinblick auf ein besonders hohes Maß an Messgenauigkeit und im Hinblick auf eine zu steigernde Zuverlässigkeit bei der Ableitung der Drehwerte ist es jedoch von besonderem Vorteil, wenn die einem Wirbelstromelement zu Grunde liegende Scheibe mit oder aus einem elektrisch nicht leitfähigen Material besteht, wobei auf mindestens einer Oberfläche der Scheibe zur Formung der materiellen Bereiche Abschnitte eines elektrisch leitfähigen Materials, eines metallischen Materials, eines Metalls, aus Aluminium und/oder aus Kupfer angeordnet sind.

Insbesondere ist es denkbar, dass die einem Wirbelstromelement zu Grunde liegende Scheibe vollständig mit oder aus einem metallischen Material, zum Beispiel Aluminium oder Kupfer, oder als eine Platine oder nach Art einer Platine ausgebildet ist oder wird.

Dabei ist es von besonderem Vorteil, wenn jeweilige materielle Bereiche und insbesondere Stege einer als Schlitzscheibe ausgebildeten Scheibe des Wirbelstromelements in Form einer Platine als flach strukturierte Elemente eines elektrisch leitfähigen Materials auf mindestens einer Seite der Platine und wenn Schlitze als im Vergleich zu den Stegen elektrisch nicht, weniger gut oder schlecht leitfähige Bereiche auf der mindestens einen Seite der Platine ausgebildet sind, insbesondere als Ausnehmungen in einem zu Grunde liegenden Material.

Ein besonderer Vorteil der vorliegenden Erfindung liegt auch darin, dass eine Drehwerterfassung im Sinne der Bestimmung einer Drehrichtung, eines Drehwinkels und/oder einer Drehzahl kombiniert werden kann mit der Erfassung eines auf eine zu Grunde liegende Welle wirkenden Drehmoments.

So ist es bei einer besonders bevorzugten Ausgestaltungsform der erfindungsgemäßen Drehwerterfassungseinrichtung vorgesehen, dass diese zusätzlich eingerichtet ist, als Drehmomenterfassungseinrichtung ein auf eine oder die zu Grunde liegende Welle und insbesondere auf eine Kurbelwelle einer mit Muskelkraft und/oder oder mit Motorkraft antreibbaren Arbeitsvorrichtung und insbesondere eines Fahrzeuges entlang einer Rotationsachse wirkendes Drehmoment zu erfassen.

Dazu sind in vorteilhafter Weise im zu Grunde liegenden Wirbelstromelement vom Drehmoment zwischen einer Antriebsseite und einer Abtriebsseite der Welle abhängige elektrische Wirbelströme generierbar.

Grundsätzlich sind zur Drehmomenterfassung zwar die in der DE 10 2016 210 385 A1 vorgestellten Maßnahmen mit dem erfindungsgemäßen Konzept kombiniert einsetzbar, jedoch ist es von besonderem Vorteil, wenn zusätzlich das Wirbelstromelement eine erste Schlitzscheibe mit Schlitzen und Stegen für die Drehmomenterfassung als die erste Scheibe und eine zweite Schlitzscheibe mit Schlitzen und Stegen für die Drehmomenterfassung aufweist, wobei
(i) die Schlitzscheiben vollständig mit oder aus Metall, zum Beispiel mit oder aus Aluminium und/oder Kupfer, oder als Platinen oder nach Art von Platinen ausgebildet sind und/oder
(ii) die Stege der Schlitzscheiben für die Drehmomenterfassung als flach strukturierte Elemente eines elektrisch leitfähigen Materials auf mindestens einer Seite einer jeweiligen Platine und die Schlitze für die Drehmomenterfassung als im Vergleich zu den Stegen elektrisch nicht oder schlecht leitfähige Bereiche auf der mindestens einen Seite einer jeweiligen Platine ausgebildet sind.

Die für die Drehmomenterfassung in der Kombination mit der Drehwerterfassung im Sinne der Erfassung einer Drehrichtung, eines Drehwinkels und/oder einer Drehzahl, ergriffenen Maßnahmen sind für sich isoliert betrachtet gegenüber den herkömmlichen Maßnahmen der DE 10 2016 210 385 A1 vorteilhaft, weil bei einem verringerten Bauraum eine höhere Zuverlässigkeit und Detektionsgenauigkeit beim Erfassen eines auf eine zu Grunde liegende Welle wirkenden Drehmoments erreicht werden.

So wird gemäß einem weiteren Aspekt der vorliegenden Erfindung eine Drehwerterfassungseinrichtung vorgeschlagen, welche eingerichtet ist, als Drehmomenterfassungseinrichtung ein auf eine Welle und insbesondere auf eine Kurbelwelle einer mit Muskelkraft und/oder oder mit Motorkraft antreibbaren Arbeitsvorrichtung und insbesondere eines Fahrzeuges entlang einer Rotationsachse wirkendes Drehmoment zu erfassen. Als Drehmomenterfassungseinrichtung weist die erfindungsgemäße Drehwerterfassungseinrichtung gemäß dem zweiten Aspekt der vorliegenden Erfindung ein Wirbelstromelement auf, in welchem vom Drehmoment zwischen der Antriebsseite und der Abtriebsseite abhängige elektrische Wirbelströme generierbar sind. Ferner ist erfindungsgemäß eine Wirbelstromsensoreinheit zur Erfassung von im Wirbelstromelement generierten elektrischen Wirbelströmen ausgebildet. Ferner weist bei der Drehwerterfassungseinrichtung gemäß dem zweiten Aspekt der vorliegenden Erfindung das Wirbelstromelement eine erste Schlitzscheibe mit Schlitzen und Stegen und eine zweite Schlitzscheibe mit Schlitzen und Stegen zur Drehmomenterfassung auf, wobei
(i) die Schlitzscheiben als Platinen oder nach Art von Platinen ausgebildet sind und
(ii) die Stege der Schlitzscheiben als flach strukturierte Elemente eines elektrisch leitfähigen Materials auf mindestens einer Seite einer jeweiligen Platine und die Schlitze als im Vergleich zu den Stegen elektrisch nicht, weniger gut oder schlecht leitfähige Bereiche auf der mindestens einen Seite einer jeweiligen Platine ausgebildet sind.

Bei beiden erfindungsgemäßen Konzepten, nämlich bei der erfindungsgemäßen Drehwerterfassungseinrichtung zur Erfassung einer Drehrichtung, eines Drehwinkels und/oder einer Drehzahl und/oder bei der erfindungsgemäßen Drehwerterfassungseinrichtung zur Erfassung eines auf eine Welle wirkenden Drehmoments, können die nachfolgend dargestellten Maßnahmen in vorteilhafter Weise vorgesehen sein.

So ist es denkbar, dass jeweilige materielle Bereiche, Stege und/oder Schlitze auf beiden Seiten einer jeweiligen Platine ausgebildet sind, um so die Sensitivität beim Erfassungsvorgang zu steigern.

Alternativ oder zusätzlich können jeweilige materielle Bereiche, Stege und/oder Schlitze als auf einer jeweiligen Seite einer jeweiligen Platine gefräste, fotolithografisch ausgebildete, geätzte und/oder gedruckte Elemente ausgebildet sein.

Ferner können jeweilige materielle Bereiche und/oder Stege mit oder aus einem metallischen Material, einem Metall und/oder Kupfer ausgebildet sein.

Zusätzlich oder alternativ können jeweilige materielle Bereiche und/oder Schlitze als Ausnehmungen in einem elektrisch leitfähigen Material und/oder im Material der Stege und/oder als Bereiche aus einem im Vergleich zum Material der Stege elektrisch nicht oder schlechter leitenden Material ausgebildet sein, insbesondere benachbart zu einem elektrisch leitenden Material der Stege.

Bei Ausführungsformen mit Stützscheiben können diese als konzentrisch zueinander angeordnete und/oder sich nicht direkt berührende oder sich berührende Kreisscheiben ausgebildet sein.

In diesem Fall kann eine erste Schlitzscheibe mechanisch mit einer der Antriebsseite und der Abtriebsseite und eine zweite Schlitzscheibe mechanisch mit der anderen der Antriebsseite und der Abtriebsseite der Welle oder eines zu Grunde liegenden Torsionselements der Welle koppelbar oder gekoppelt sein.

Dabei können die jeweiligen Schlitzscheiben in Abhängigkeit vom Drehmoment gegeneinander verdrehbar sein, um ein oder mehrere in Abhängigkeit von der gegenseitigen Verdrehung verschiedengradig überdeckte Anordnungen von Schlitzen und Stegen auszubilden, welche insbesondere im Bereich verschiedener radialer Abstände von einem Zentrum der Schlitzscheiben ausbildbar sind.

Der Erfassung eines Drehwerts wird jeweils ein Aufprägen eines externen magnetischen Felds zu Grunde gelegt. Dies gilt sowohl für die Erfassung des Drehmoments als auch für die Erfassung eines Drehwerts im Sinne einer Drehrichtung, eines Drehwinkels und/oder einer Drehzahl der zu Grunde liegenden Welle.

Dazu ist es von besonderem Vorteil, wenn gemäß einer bevorzugten Ausgestaltungsform der erfindungsgemäßen Drehwerterfassungseinrichtung die eingesetzte Wirbelstromsensoreinheit eingerichtet ist, ein magnetisches Wechselfeld zu erzeugen, dem Wirbelstromelement aufzuprägen und im Wirbelstromelement generierte Wirbelströme und/oder Werte zu mindestens einer dafür repräsentativen Messgröße zu erfassen.

Es weist gemäß einem besonders bevorzugten Ausführungsbeispiel der erfindungsgemäßen Drehwerterfassungseinrichtung die Wirbelstromsensoreinheit ein oder mehrere Wirbelstromsensorelemente - insbesondere in Form von Erreger- und/oder Messspulen - auf.

Dabei ist es von besonderem Vorteil, wenn ein jeweiliges Wirbelstromsensorelement jeweils einer bestimmten Anordnung von materiellen Bereichen, Schlitzen und/oder Stegen einer jeweiligen Scheibe und insbesondere der Schlitzscheiben zugeordnet ist.

Eine besonders kompakte Bauform stellt sich bei gleichzeitiger Steigerung der Sensitivität bei der Messwerterfassung ein, wenn gemäß einer anderen Ausführungsform der erfindungsgemäßen Drehwerterfassungseinrichtung die Wirbelstromsensoreinheit und insbesondere das eine oder die mehreren Wirbelstromsensorelemente als flach strukturierte metallische Elemente und insbesondere als Kupferelemente und/oder als auf einer Platine strukturierte oder gedruckte Elemente ausgebildet sind.

In vorteilhafter Weise sind die Wirbelstromsensoreinheit und insbesondere das eine oder die mehreren Wirbelstromsensorelemente mechanisch vom Wirbelstromelement, von der Welle und von einem etwaigen Torsionselement entkoppelt.

Ferner sind die Wirbelstromsensoreinheit und insbesondere das eine oder die mehreren Wirbelstromsensorelemente zusätzlich oder alternativ in einem Gehäuse, insbesondere in einem Kurbelgehäuse eines Tretlagers, ortsfest montiert.

Die Drehwerterfassungseinrichtung kann vorteilhafterweise so ausgebildet sein oder werden, dass bei der Drehwerterfassung zwei Signale generiert und ausgewertet werden, zum Beispiel indem zwei Induktivitäten erfasst und ausgewertet werden. Dies erfolgt idealerweise unter Verwendung eines Sinussignals und eines Kosinussignals. Damit ist sichergestellt, dass der aus der Kombination der Messsignale abgeleitete Drehwinkel über den gesamten Winkelbereich, zum Beispiel von 0° bis 360°, vor allem eindeutig, aber auch temperaturunabhängig und/oder auch in Bezug auf den Abstand etwaiger Schlitzscheiben zu einer Scheibe oder Spulenscheibe allgemein zu einer Wirbelstromsensoreinheit abstandsunabhängig ist.

Die vorliegende Erfindung schafft des Weiteren einen Antrieb für eine mit Muskelkraft und/oder oder mit Motorkraft antreibbare Arbeitsvorrichtung und insbesondere für ein Fahrzeug, Fahrrad, Elektrofahrrad, eBike, Pedelec oder dergleichen. Die Arbeitsvorrichtung ist ausgebildet mit einer erfindungsgemäßen Drehwerterfassungseinrichtung, nämlich zur Erfassung mindestens eines Drehwerts einer Welle des Antriebs, insbesondere eines auf die Welle wirkenden Drehmomentes, einer Drehrichtung, eines Drehwinkels und/oder einer Drehzahl, wobei insbesondere auf der Grundlage des mindestens einen erfassten Drehwerts der Antrieb überwachbar und/oder steuerbar ist.

Dabei ist es von besonderem Vorteil, wenn im Zusammenhang mit einer Drehmomenterfassung ein etwaig vorhandenes Torsionselement ein kraft- und/oder drehmomentübertragendes Element, ein Antriebselement und/oder ein Abtriebselement ist oder aufweist, insbesondere ein Zahnrad, einen Planetensteg, einen Planetenträger eines Planetengetriebes oder dergleichen.

Schließlich schafft die vorliegende Erfindung auch eine mit Muskelkraft und/oder oder mit Motorkraft antreibbare Arbeitsvorrichtung, ein Fahrzeug, Fahrrad, Elektrofahrrad, eBike und/oder Pedelec, mit mindestens einem antreibbaren Element oder Rad und mit einem erfindungsgemäß ausgebildeten Antrieb (80) zum Antreiben des mindestens einen antreibbaren Elements oder Rads, bei welchem auf der Grundlage des mindestens einen erfassten Drehwerts der Antrieb überwachbar und/oder steuerbar ist.

### Kurzbeschreibung der Figuren

Unter Bezugnahme auf die beigefügten Figuren werden Ausführungsformen der Erfindung im Detail beschrieben.
- Figur 1: ist eine schematische Darstellung für ein Beispiel einer erfindungsgemäßen Arbeitsvorrichtung oder eines Fahrzeugs nach Art eines Elektrofahrrads, bei welchem eine erste Ausführungsform der Erfindung realisiert ist.
- Figur 2: ist eine schematische und teilweise geschnittene Seitenansicht einer Ausführungsform der erfindungsgemäßen Drehwerterfassungseinrichtung im Zusammenhang mit der Verwendung in einem Antrieb.
- Figuren 3 und 4: zeigen in schematischer Seitenansicht eine Ausführungsform der erfindungsgemäßen Drehwerterfassungseinrichtung im Hinblick auf zwei zu unterschiedlichen Drehmomenten gehörigen Zuständen des zu Grunde liegenden zu vermessenden Systems.
- Figur 5: zeigt in schematischer und teilweise geschnittener Seitenansicht andere Ausführungsformen der erfindungsgemäßen Drehwerterfassungseinrichtung.
- Figuren 6 und 7: zeigen schematisch ein Layout für eine erste bzw. eine zweite Schlitzscheibe.
- Figur 8: zeigt schematisch eine Platine zu einer erfindungsgemäß ausgestalteten Wirbelstromsensoreinheit.
- Figuren 9 bis 11: zeigen schematisch abgewickelt dargestellte Spulen einer Spulenanordnung für eine erfindungsgemäße Wirbelstromsensoreinheit.
- Figuren 12 und 13: zeigen schematisch Vorder- und Rückseite eines Layouts einer Platine für eine erfindungsgemäß ausgestaltete Wirbelstromsensoreinheit.
- Figur 14: zeigt schematisch nach Art eines Graphen die Winkelabhängigkeit des Verlaufs der Induktivität der Spulen einer Wirbelstromsensoreinheit gemäß der vorliegenden Erfindung.
- Figur 15: demonstriert verschiedene Überdeckungen von Spulenanordnungen einer erfindungsgemäßen Wirbelstromsensoreinheit mit entsprechenden Stegen und Ausnehmungen vorgesehener Schlitzscheiben.
- Figuren 16 und 17: zeigen Anordnungen für eine zweispurige und vollständig analoge Erfassung eines Drehwinkels bei einer Ausgestaltungsform der erfindungsgemäßen Drehwerterfassungseinrichtung.
- Figur 18: beschreibt die Kennlinie von Induktivitäten verschiedener Spulen auf einer Vorderseite bzw. einer Rückseite einer Platine einer Wirbelstromsensoreinheit gemäß der vorliegenden Erfindung.
- Figuren 19 und 20: zeigen eine Ausgestaltungsform der erfindungsgemäßen Wirbelstromsensoreinheit mit ersten und zweiten Spuren auf der Vorderseite einer Platine bzw. entsprechende Signalverläufe der Induktivitäten der verschiedenen Spulenelemente.
- Figuren 21 und 22: zeigen schematisch eine andere Ausführungsform der erfindungsgemäßen Wirbelstromsensoreinheit mit einem radial innen umlaufenden keilförmigen Steg zur Erfassung einer Drehrichtung, eines Drehwinkels und/oder einer Drehzahl.
- Figuren 23 bis 23B: zeigen eine alternative Ausführungsform der vorliegenden, bei welcher das Wirbelstromelement mittels einer Abfolge von Erhebungen und Vertiefungen nach Art eines Zahnrads auf einer Oberfläche der Welle ausgebildet ist.

### Bevorzugte Ausführungsformen der Erfindung

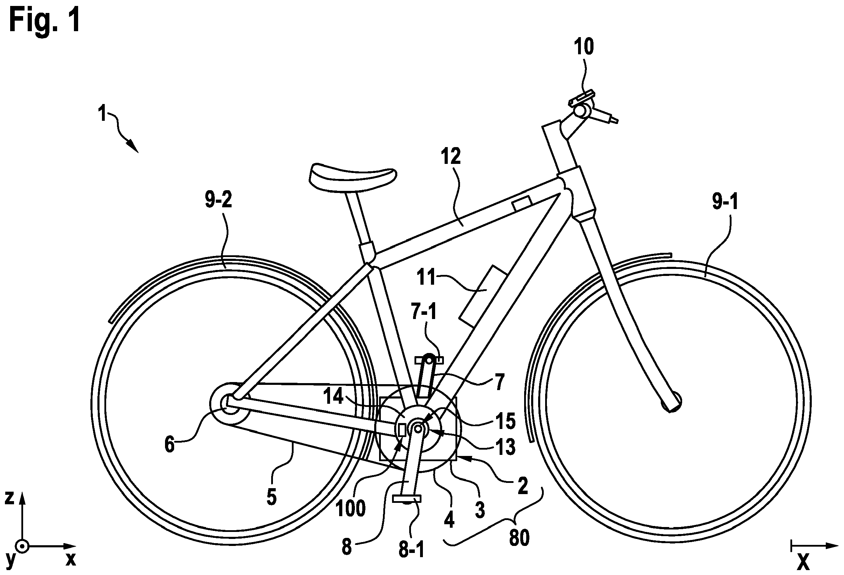

Nachfolgend werden unter Bezugnahme auf die Figuren 1 bis 23B Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Ausführungsform der erfindungsgemäßen Arbeitsvorrichtung nach Art eines Elektrofahrrads einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem elektrischen Antrieb 3 verbunden ist. Im oder am Rahmen 12 ist ferner Batterie 11 ausgebildet, welche zur Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Im Bereich des Kurbelgehäuses 14 und in der Nähe der Kurbelwelle 15 ist eine Ausführungsform der erfindungsgemäßen Drehmomenterfassungseinrichtung 100 ausgebildet.

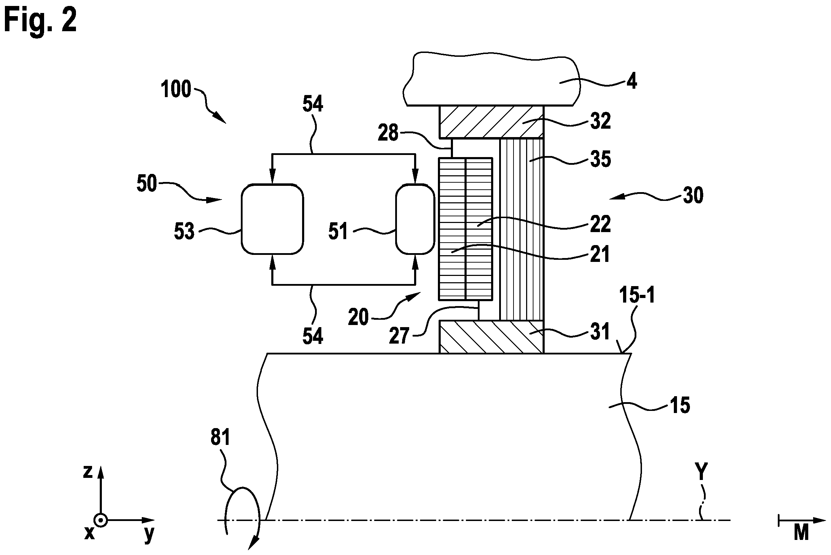

Der geometrische und messtechnische Zusammenhang zwischen der Drehwerterfassungseinrichtung 100 und einer zu vermessenden Kurbelwelle 15 wird nachfolgend unter Bezugnahme auf die weitergehenden Figuren 2 bis 23B erläutert.

Es ist vorab noch festzuhalten, dass das von der Drehwerterfassungseinrichtung 100 erfasste und ggf. auch bewertete Signal - zum Beispiel im Zusammenhang mit einem auftretenden Drehmoment oder Torsionsmoment, einer Drehrichtung, einem Drehwinkel und/oder einer Drehzahl an der Welle 15 - auch verwendet werden kann, um im Zusammenwirken mit der Steuereinheit 10 die Kraft- und Momentübertragung auf Grund der Fahrerbetätigung und/oder auf Grund des elektrischen Antriebs 3 und deren Verhältnisse zu bewerten und/oder zu regeln.

Figur 2 zeigt in schematischer und teilweise geschnittener Darstellung eine Ausführungsform der erfindungsgemäßen Drehwerterfassungseinrichtung 100 in einer Situation vergleichbar zu derjenigen, wie sie in Figur 1 dargestellt ist. Die Drehwerterfassungseinrichtung 100 wird hier bei einer Kurbelwelle 15 verwendet, welche zur Drehung um die Rotationsachse Y mit einem Drehmoment M beaufschlagt wird.

Zur Darstellung des auf die Welle 15 wirkenden Drehmomentes M - als eine Form des Drehwerts - ist ein so genanntes Torsionselement 30 ausgebildet, welches mit einer antriebsseitigen Anbindung 31 an der Außenumfangsfläche 15-1 der Kurbelwelle 15 und mit einer abtriebsseitigen Anbindung 32 an einem allgemeinen Abtriebselement 4 angebracht ist.

Diese Konstellation ist nicht zwingend, insbesondere im Hinblick auf das Vorsehen des Torsionselements 30, welches entfallen kann, wenn Eindrehmoment nicht erfasst werden soll, sondern ausschließlich andere Drehwerte, zum Beispiel eine Drehrichtung, einen Drehwinkel und/oder eine Drehzahl der zu Grunde liegenden Welle.

Soll jedoch das Drehmoment M, welches auf die Welle 15 wirkt, erfasst werden, ist es notwendig, dass das Torsionselement 30 mit dem Torsionskörper 35 und den Anbindungen 31 und 32 zwischen einem Antriebsbereich oder Antriebspunkt einerseits und einem Abtriebsbereich oder Abtriebspunkt andererseits gekoppelt ist, so dass mit dem Moment M in Zusammenhang stehende weitergehende Momente oder Kräfte auf den Torsionskörper 35 des Torsionselements 30 einwirken können.

Auf Grund dieser Einwirkung des Moments M auf den Torsionskörper 35 des Torsionselements 30 werden die Anbindungen 31 und 32 relativ zueinander verschoben. Das Maß dieser Verschiebung ist repräsentativ für das wirkende Moment M und abhängig von den elastischen Parametern des Torsionskörpers 35 des Torsionselements 30.

Zur Darstellung der relativen Verschiebung der Anbindungen 31 und 32 und damit zur Darstellung des wirkenden Drehmoments M ist mit diesen Anbindungen 31 und 32 über entsprechende Anbindungen 27 und 28 ein Wirbelstromelement 20 mechanisch gekoppelt.

In der Ausführungsform gemäß Figur 2 besteht das Wirbelstromelement 20 aus einer ersten Schlitzscheibe 21 und einer zweiten Schlitzscheibe 22. Die Schlitzscheiben 21, 22 sind mechanisch nicht direkt miteinander verbunden und somit gegeneinander mechanisch verschieblich oder verdrehbar.

Die erste Schlitzscheibe 21 ist über eine abtriebsseitige Anbindung 28 mit dem Abtriebselement 4 oder zumindest mit der abtriebsseitigen Anbindung 32 des Torsionselements 30 verbunden.

Die zweite Schlitzscheibe 22 ist über eine antriebsseitige Anbindung 27 entweder direkt mit der Welle 15 oder der antriebsseitigen Anbindung 31 des Torsionselements 30 verbunden.

Im Betrieb wird durch eine momentenbedingte Verschiebung der Anbindungen 31 und 32 des Torsionselements 30 eine Verschiebung oder Verdrehung der Schlitzscheiben 21 und 22 gegeneinander bewirkt.

Diese Verschiebung kann messtechnisch wie folgt erfasst und genutzt werden:
In unmittelbarer räumlicher Nachbarschaft, aber doch räumlich getrennt vom Wirbelstromelement 20 mit den ersten und zweiten Schlitzscheiben 21 und 22, ist eine Wirbelstromsensoreinheit 50 mit einem Wirbelstromsensorelement 51 über Steuer- und Messleitungen 54 in Verbindung mit einer Steuer- und Auswerteeinheit 53 vorgesehen. Die Wirbelstromsensoreinheit 50 ist dazu ausgebildet, über das Wirbelstromsensorelement 51 oder ggf. über eine zusätzliche Erregereinheit dem Wirbelstromelement 20 ein magnetisches Wechselfeld aufzuprägen. Durch entsprechende Wechselwirkung der Anordnung aus erster und zweiter Schlitzscheibe 21, 22 des Wirbelstromelements 20, insbesondere unter Drehbewegung entsprechend dem Pfeil 81, werden - eine geeignete Materialwahl der Schlitzscheiben 21 und 22 vorausgesetzt - in dem Wirbelstromelement 20 Wirbelströme erzeugt, welche gemäß der Lenzschen Regel zu einem dem aufgeprägten magnetischen Wechselfeld des Wirbelstromsensorelements 51 entgegengesetzten Feld führen. Diese Gegenreaktion kann durch das Wirbelstromsensorelement 51 oder gegebenenfalls durch eine separat vorgesehene Messeinrichtung erfasst werden und ist abhängig von der Konstellation der sich überlagernden Schlitzscheiben 21 und 22 und mithin von deren Stellung relativ zueinander. Über eine entsprechende Ausgestaltung der Geometrie der Schlitzscheiben 21 und 22 kann somit auf Grund der Messung der mit den induzierten Wirbelströmen im Zusammenhang stehenden magnetischen Gegenfelder auf die Stärke des wirksam gewordenen Drehmoments M geschlossen werden.

Gemäß der Anordnung in Figur 2 ist die Rotationsachse Y der Welle 15 parallel zur y-Richtung ausgebildet. Die gesamte Anordnung aus Welle 15, Torsionselement 30, Wirbelstromelement 20 und Abtriebselement 4 ist rotationssymmetrisch zur Rotationsachse Y der Welle 15 ausgebildet. Über die Anbindungen 27 und 28 ist das Wirbelstromelement 20 drehfest mit dem Torsionselement 30 und somit drehfest mit der Welle 15 verbunden. Gegenüber einer Drehung dieser Anordnung ist die Wirbelstromsensoreinheit 50 entkoppelt ausgebildet. Sie dreht sich also nicht mit, sondern ist starr angeordnet, zum Beispiel an einem Bereich des Kurbelgehäuses 14 aus Figur 1.

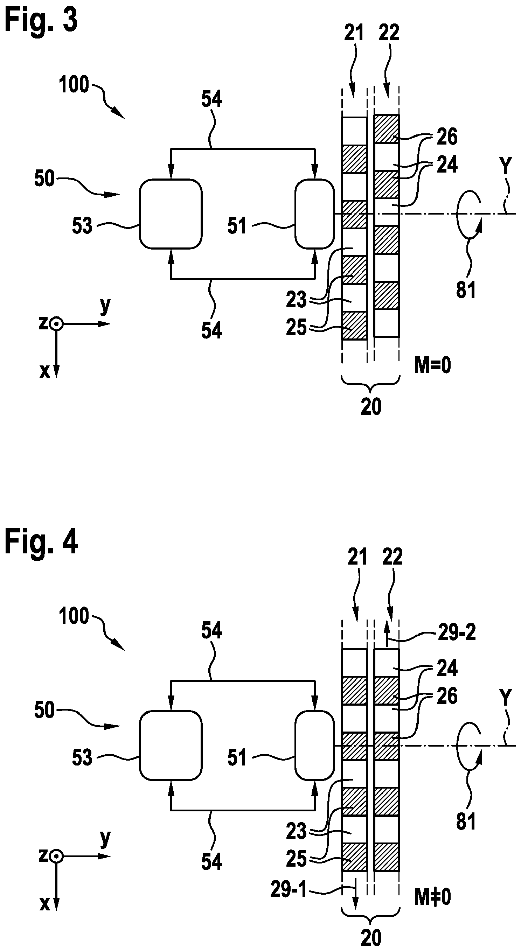

Die Figuren 3 und 4 zeigen in schematischer und teilweise geschnittener Seitenansicht eine Ausführungsform der erfindungsgemäßen Drehwerterfassungseinrichtung 100 - insbesondere als Drehmomenterfassungseinrichtung - mit einer Wirbelstromsensoreinheit 50 zum Erfassen eines Zustands eines Wirbelstromelements 20 in Kopplung mit einer zu Grunde liegenden Kombination aus Welle 15, Torsionselement 30 und Abtriebselement 4 und im Zusammenhang mit zwei unterschiedlichen Drehmomentsituationen, nämlich mit einem verschwindenden auf die Welle 15 wirkenden Drehmoment M = 0 und einem nicht verschwindenden Drehmoment M ≠ 0, das auf die Welle 15 wirkt.

Im Schnitt zeigt die erste Schlitzscheibe 21 des Wirbelstromelements 20 eine Abfolge von Schlitzen 23 und von Stegen 25. Entsprechend zeigt die zweite Schlitzscheibe 22 eine alternierende Abfolge von Schlitzen 24 und Stegen 26.

In der in Figur 3 gezeigten Anordnung koinzidieren direkt benachbart zum Wirbelstromsensorelement 51 der Wirbelstromsensoreinheit 50 ein Steg 25 der ersten Schlitzscheibe 21 und ein Schlitz 24 der zweiten Schlitzscheibe 22. Bei einer Drehung in Pfeilrichtung 81 um die Rotationsachse Y ergibt sich eine Abfolge von Wirbelstromsignalen, die hervorgerufen werden durch die Kombination aus Steg 25 und Schlitz 24 bzw. aus Schlitz 23 und Steg 26 der ersten und zweiten Schlitzscheiben 21 und 22, sofern ein verschwindendes Drehmoment an der Welle 15 anliegt.

Figur 4 zeigt einen Zustand derselben Drehwerterfassungseinrichtung 100 als Drehmomenterfassungseinrichtung bei einem von Null verschiedenen Drehmoment M ≠ 0. Auf Grund der mit der Torsion des Torsionskörpers 35 des Torsionselements 30 zusammenhängenden Kräftepaares mit Kräften 29-1 und 29-2 werden die ersten und zweiten Schlitzscheiben 21, 22 des Wirbelstromelements 20 relativ zueinander lokal verschoben oder insgesamt verdreht, so dass nunmehr die Stege 25 und 26 bzw. die Schlitze 23 und 24 mit dem Wirbelstromsensorelement 51 der Wirbelstromsensoreinheit 50 zur Anlage kommen. Diese Anordnung von Schlitz 23 mit Schlitz 24 oder von Steg 25 mit Steg 26 liefert ein gegenüber der Konstellation gemäß Figur 3 verändertes Signal und damit einen Hinweis auf das wirksam gewordene Drehmoment M ≠ 0.

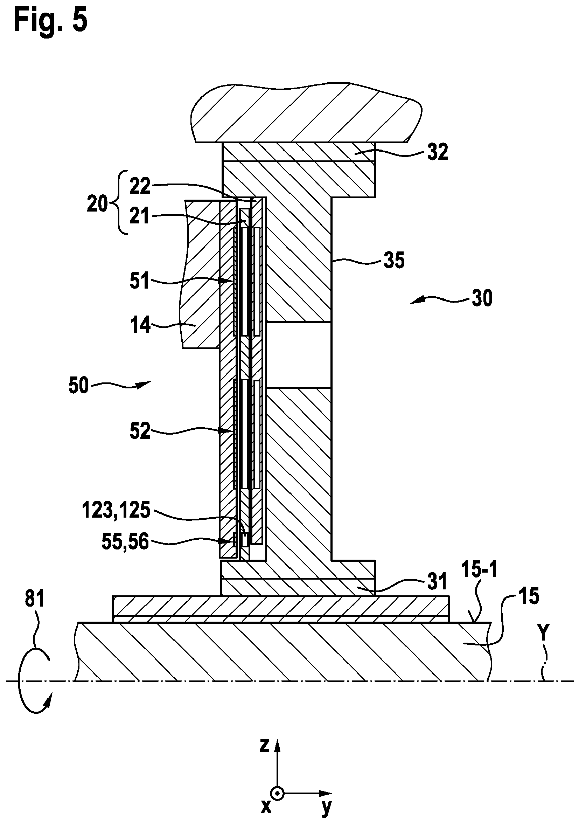

Figur 5 zeigt eine alternative Anordnung für eine Ausführungsform der erfindungsgemäßen Drehwerterfassungseinrichtung 100 - insbesondere simultan als Drehmomenterfassungseinrichtung und als Erfassungseinrichtung für eine Drehrichtung, einen Drehwinkel und/oder eine Drehzahl - im Zusammenhang mit einer mit einem Drehmoment M beaufschlagbaren Welle 15, an deren Außenumfangsfläche 15-1 ein Torsionselement 30 und in Kopplung mit diesem ein Wirbelstromelement 20 mit zueinander beweglichen ersten und zweiten Schlitzscheiben 21 und 22 ausgebildet ist.

Von der Drehung der Welle 15, des Wirbelstromelements 20 und des Torsionselements 30 entkoppelt ist eine Wirbelstromsensoreinrichtung 50 mit einem ersten, zweiten und einem dritten Wirbelstromsensorelement 51, 52 bzw. 55 ausgebildet.

Das erste und das zweite Wirbelstromsensorelement 51 bzw. 52 dienen der Erfassung entsprechender Wirbelstromsignale aus unterschiedlichen Bereichen der Kombinationen von Schlitzen 23, 24 und Stegen 25, 26 in unterschiedlich radial beabstandeten Bereichen relativ zur Rotationsachse Y.

Dagegen fungiert das dritte Wirbelstromsensorelement 55 als Drehrichtungs-, Drehwinkel- oder Drehzahlsensor.

Es ist denkbar, dass anstelle eines einzelnen Wirbelstromsensorelements 55 für die Drehrichtung, den Drehwinkel und/oder für die Drehzahl eine Anordnung und insbesondere Spulenanordnung 56 aus einer Mehrzahl von Spulen zum Beaufschlagen mit einem magnetischen Wechselfeld und/oder zum Messen von Wirbelströmen in den materiellen Bereichen 123, 125 am radialen Außenbereich der vorderen Schlitzscheibe 21 als erste Scheibe im Sinne der vorliegenden Erfindung ausgebildet ist.

Unter Verwendung antriebsseitiger und abtriebsseitiger Anbindungen 31 bzw. 32 ist ein Torsionselement 30 mit Torsionskörper 35 zwischen der Welle 15 und deren Außenumfangsfläche 15-1 einerseits und einem Abtriebselement 4 andererseits ausgebildet. Des Weiteren ist in Anbindung an den antriebsseitigen Teil des Torsionskörpers 35 und an den abtriebsseitigen Teil des Torsionskörpers 35 eine erste bzw. eine zweite Schlitzscheibe 21 bzw. 22 eines Wirbelstromelements 20 angekoppelt ausgebildet. Die Schlitzscheiben 21 und 22 sind mechanisch nicht direkt miteinander gekoppelt und somit gegeneinander verdrehbar und/oder lokal verschiebbar.

In unmittelbarer axialer Nachbarschaft zur ersten Schlitzscheibe 21 ist eine Ausführungsform der erfindungsgemäßen Wirbelstromsensoreinheit 50 mit einem ersten, zweiten und dritten Stromsensorelement 51, 52 bzw. 55 ausgebildet.

Das erste Wirbelstromsensorelement 51 und das zweite Wirbelstromsensorelement 52 dienen der Detektion von Wirbelströmen im Zusammenhang mit einer Konfiguration aus Schlitzen 23, 24 und Stegen 25, 26 der ersten und zweiten Schlitzscheiben 21 und 22.

Das dritte Wirbelstromsensorelement 55 dient dagegen der Detektion eines Verdrehwinkels und ggf. der Stellung und der Drehzahl der Welle 15 oder zumindest des Torsionselements 30 im Raum.

Diese und weitere Merkmale und Eigenschaften der vorliegenden Erfindung werden an Hand der folgenden Darlegungen weiter erläutert:
Die Erfindung betrifft insbesondere auch Elektrofahrräder, Pedelecs, eBikes und dergleichen, welche insbesondere mit einem Mittelmotor ausgebildet sein können und/oder welche zur Steuerung der Motorunterstützung eine Fahrerwunschsensierung aufweisen.

Dazu wird neben der Drehzahl und Drehrichtung vor allem das von der Trittkraft des Fahrers ausgehende Drehmoment M auf die Kurbelwelle 15 gemessen. Es wird das Gesamtdrehmoment aus der Summe der Trittkraft vom linken und rechten Pedal ermittelt. Bekannt sind z.B. berührungslose Messverfahren in der Tretlagereinheit. Während Drehzahl und Drehrichtung über einen Hallsensor erfasst werden, erfolgt die Messung des Drehmoments häufig durch ein magnetoelastisches Verfahren. Diese Verfahren der Drehmomentdetektion sind häufig zu sensitiv, teuer, komplex und erfordern Bauraum um die Kurbelwelle durch die Verwendung einer zur Kurbelwelle koaxialen Drehmomenthülse.

Eine direkte Messung der durch Torsionsbeanspruchung in der Drehmomenthülse hervorgerufenen elastischen Verformung ist beispielsweise durch Oberflächenwellensensoren möglich. Hierfür ist ebenfalls eine koaxial zur Kurbelwelle angebrachte Messwelle bzw. Drehmomenthülse erforderlich.

Weitere bekannte Messverfahren zur Drehmomentdetektion sind Verfahren, welche den Federweg, der durch ein zusätzliches Getriebe zur Wandlung der vom Fahrer ausgehenden Drehzahl und des vom Fahrer ausgehenden Drehmoments auftritt, zur Detektion ausnutzen. Vorteilhaft ist dabei der Ersatz einer einfachen Kraftmessung. Nachteilig sind dabei der zusätzlich erforderliche Bauraum, das zusätzliche Gewicht, der schlechtere Gesamtwirkungsgrad und die zusätzliche Geräuschquelle.

Es sind auch eBike-Tretlagerantriebe mit integriertem Fahrradschaltgetriebe bekannt. Derartige Antriebe können häufig auf Grund des Bauraumbedarfs herkömmlicher Drehmomentmessverfahren nicht mehr mit diesen ausgestattet werden.

Die Erfindung hat unter anderem auch die Aufgabe, das durch die Trittkraft des Fahrers auf die Kurbelwelle 15 aufgebrachte Drehmoment M und/oder eine Drehrichtung, einen Drehwinkel und/oder einer Drehzahl der zu Grunde liegenden Welle 15 zu detektieren.

Insbesondere soll eine Drehwerterfassungseinrichtung 100 in einem eBike- oder Pedelec-Tretlagerantrieb 80 mit integriertem Fahrradschaltgetriebe realisiert werden.

Der Erfindung liegt alternativ oder zusätzlich auch die Aufgabe zu Grunde, das herkömmliche Vorgehen bei einem Wirbelstromschlitzscheibensensor - zum Beispiel aus der DE 10 2016 210 387 A1 - hinsichtlich Empfindlichkeit der Drehmomentaufnahme, der Erfassbarkeit, Auflösung und Integration einer Messung zu Drehrichtung, Drehwinkel und/oder Drehzahl, der optimalen Gestaltung und elektrischen Leitfähigkeit etwaiger Schlitzscheiben zu verbessern.

Eine weitere Aufgabe der Erfindung ist in dieser Hinsicht die Bereitstellung eines kleinbauenden, einfachen und damit auch kostengünstigen kombinierten Drehrichtungs-, Drehwinkel-, Drehzahl- und Drehmomentsensors, der zum Beispiel in das Getriebe eines eBikes integriert werden kann und damit auch die mechanische übertragende Leistung in Echtzeit messen kann. Durch einen differenzbasierten Ansatz sind sowohl Abstandsänderungen wie auch Temperatureinflüsse weitestgehend kompensierbar.

Die Erfindung löst die gestellten Aufgaben auch durch den Einsatz eines Wirbelstromschlitzscheibensensors zum Beispiel mit planaren Platinenspulen an einem mit der Tretkurbelwelle 15 des eBike- oder Pedelec-Tretlagerantriebs 80 drehfest verbundenen Träger, zum Beispiel eines Trägers einer Planetengetriebestufe. Hierdurch ist es möglich, einen Drehmomentsensor 50 in senkrechter Anordnung zur Tretkurbelwelle 15 und damit geringer axialer Ausdehnung in Richtung der Tretkurbelwelle 15 anzubringen.

Die Erfindung löst die gestellte Aufgabe alternativ oder zusätzlich auch durch den Einsatz eines Wirbelstromschlitzscheibensensors, welcher mit planaren Platinenspulen an einem mit einer Welle 15, zum Beispiel einer Kurbelwelle, eines mit Muskelkraft und/oder mit Motorkraft antreibbaren Fahrzeuges 1 drehfest verbundenen scheibenförmigen Torsionselement 30 ausgebildet ist und welcher eine differenzielle Messung eines sehr kleinen Verdrehwinkels des Torsionselements 30 mittels der Schlitzscheiben 21, 22 erlaubt.

Dabei besteht das System zum Beispiel aus rotatorisch an dem Torsionselement 30 angebrachten Schlitzscheiben 21, 22, welche das Wirbelstromelement 20 bilden, und aus einer als Stator fixierten Platine, welche die Wirbelstromsensoreinheit 50 bildet und sowohl die Elektronik wie auch die Sensor- und/oder Erregerspulen 51, 52, 55 trägt.

Hierdurch ist ein Drehmomentsensor mit integrierter Drehrichtungs-, Drehwinkel- und Drehzahlmessung in senkrechter Anordnung zur Welle 15 und folglich mit vergleichsweise geringer axialer Ausdehnung in Richtung der Rotationsachse Y der Welle 15 möglich.

Dazu sind gegenüber einem herkömmlichen Sensor, wie er zum Beispiel aus der DE 10 2016 210 387 A1 bekannt ist, gemäß einer Ausführungsform der vorliegenden Erfindung einzeln oder in Kombination miteinander folgende Maßnahmen zur Verbesserung angebracht:
- beidseitig auf Platinen angeordnete Schlitzscheiben 21, 22 aus Kupfer,
- in Reihe geschaltete Spulen 55, 55-1, 55-2, 56 zur Drehrichtungs-, Drehwinkel- und/oder Drehzahlerfassung auf einer Platine 50', welche die Wirbelstromsensoreinheit 50 bildet und/oder nach Art einer Spulenplatine für die Drehwerterfassungseinrichtung 100 ausgebildet sind,
- optimiert aufeinander abgestimmtes Design der Schlitzscheiben 21, 22, Schlitze 23, 24, 123 und Spulen 51, 52, 55, 55-1, 55-2, 56.

Als Vorteile der erfindungsgemäß vorgesehenen Maßnahmen stellen sich eine gesteigerte Empfindlichkeit, eine höhere Auflösung und eine geringere Fehlertoleranz bei der Drehmoment-, Drehrichtungs-, Drehwinkel- und/oder Drehzahlerfassung ein.

Eine Anordnung einer Schlitzscheibe 21, 22 auf einer Platine ergibt eine besonders hohe Messempfindlichkeit und die größere mechanische Stabilität für die Schlitzscheiben ein 20, 22 sowie einen größeren Gestaltungsspielraum für die Anzahl, die Anordnung und das Design der Schlitze 25, 26, 125.

Dabei ist die einfache Herstellbarkeit der Schlitzscheiben ein 20 mal 22 von Vorteil, die wie die bekannten Leiterbahnen auf einer Platine aufgebracht werden können. Auch lassen sich die Schlitzscheiben 21, 22 dann aus Kupfer herstellen, wodurch die elektrische Leitfähigkeit und damit auch der Messeffekt bzw. die Messgenauigkeit gesteigert werden können.

In Reihe geschaltete Spulen zur Drehrichtungs-, Drehwinkel- und/oder Drehzahlerfassung ermöglichen eine sichere Detektierbarkeit der Drehrichtung, des Drehwinkels und damit der Drehzahl sowie eine Integration einer Drehrichtungs-, Drehwinkel- und/oder Drehzahlmessung in einen Drehmomentsensor.

Prinzip der Messung des Drehmoments M mittels Wirbelstrom und Träger ist dabei das Induzieren eines Wirbelstroms in gehäusefesten planaren Platinenspulen 51, 52 durch Torsionsbeanspruchung im Träger 41 hervorgerufene elastische Verformung, welche zu einer Relativdrehbewegung der beiden mit dem Träger verbundenen Schlitzscheiben 21, 22 führt.

Dabei ist die eine Schlitzscheibe 21, zum Beispiel die linke Schlitzscheibe in Figur 5, mit der Kurbelwelle 15 verbunden. Die andere Schlitzscheibe 22, zum Beispiel entsprechend die rechte Schlitzscheibe 22 in Figur 5, ist mit dem Außenrand des Torsionselements 30 verbunden. Beide Schlitzscheiben 21, 22 rotieren mit der Drehzahl der Kurbelwelle 15. Die Verdrehung der Schlitzscheiben 21, 22 zueinander ist proportional zum Drehmoment M und zur Steifigkeit des Torsionselements 30.

Die Schlitzscheiben 21, 22 sind vorzugsweise aus einem guten elektrischen Leiter hergestellt und so strukturiert, dass die Schlitze 23, 24 in der Ruhelage geschlossen sind. Verdrehen sich die Scheiben 21, 22 auf Grund eines positiven Drehmoments M zueinander, so nimmt der Schlitz der oberen Segmente zu und der Schlitz der unteren Schlitzsegmente wird noch stärker überdeckt.

Die beiden Spulen 51, 52 können auf der Sensorseite der Platine als flache strukturierte Kupferspule ausgeführt und mittels einer einfachen Elektronik mit einer Wechselspannung beaufschlagt werden. Dies gilt auch für die Spule 55 zur Erfassung von Drehrichtung, Drehwinkel und/oder Drehzahl oder für Spulen einer Anordnung 56 von Spulen, die demselben Zweck dienen.

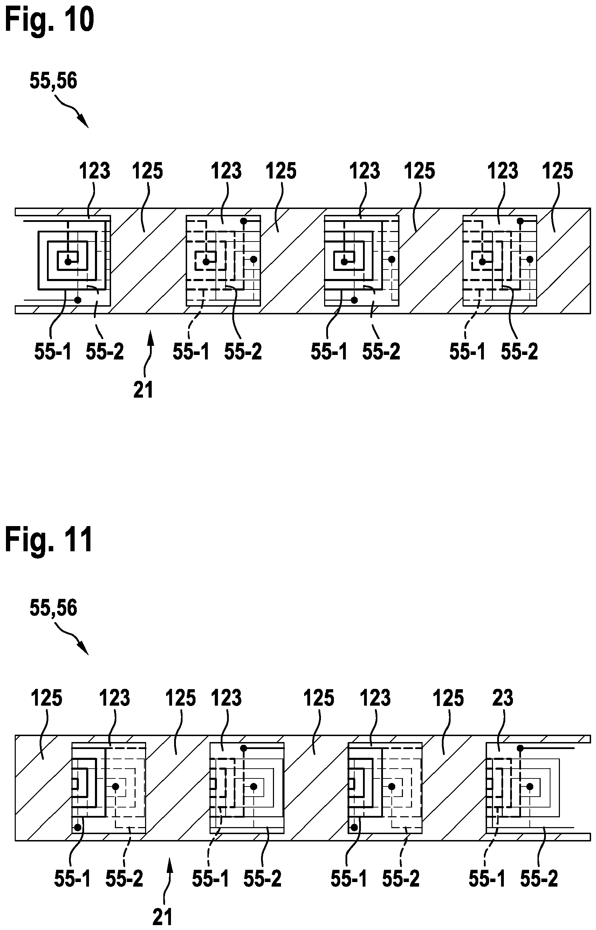

Die ortsfest mit dem Gehäuse 14 verbundenen Spulen 51, 52 und/oder 55 induzieren ein Magnetfeld, welches mit den Schlitzscheiben 21, 22 interagiert. Das Spulenmagnetfeld durchdringt die Scheiben 21, 22 und wird durch induzierte Wirbelströme geschwächt. Die Eigeninduktivität der Spulen 51, 52 und/oder 55 wird durch die Wirbelströme in den Scheiben 21, 22 verringert oder auch vergrößert in Abhängigkeit der Schlitzbreite, wie dies im Zusammenhang mit Figur 10 erläutert ist.

Die Schlitze 23, 24 können mit der dritten angepassten Spule 55 als Inkrement abgetastet werden. Dadurch ist neben der Drehmomenterfassung auch eine inkrementelle Winkelmessung möglich, die auch eine Indexierung aufweist. Folglich sind der absolute inkrementelle Winkel, die Drehzahl und das Drehmoment als Mess- oder Bussignal verfügbar.

Die Kennlinie errechnet sich aus der Halbbrückenverschaltung der Einzelinduktivitäten.

Die Erfindung kann überall dort eingesetzt werden, wo ein Drehmoment auf Basis einer Torsion gemessen werden soll. Insbesondere ist das Messverfahren für Tretlagerantriebe 80 mit integriertem Fahrradschaltgetriebe geeignet. Die Erfindung kann in einer zukünftigen Generation des eBike-Antriebs eingesetzt werden.

Figur 5 zeigt eine - zum Beispiel im Zusammenhang mit einem eBike - erfindungsgemäß ausgestaltete Drehwerterfassungseinrichtung 100 nach Art eines Wirbelstromschlitzscheibensensors, mit einem Torsionselement 30, zwei Schlitzscheiben 41, 22 und einer als Stator an einem Gehäuse 14 fixierten Platine 50' zur Ausbildung der Wirbelstromsensoreinheit 50. Bei dieser Ausführungsform trägt die Platine 50' der Wirbelstromsensoreinheit 50 sowohl die Elektronik als auch die Sensor- und/oder Erregerspulen 51, 52 und 55.

Die gehäuse- und ortsfesten planaren Platinenspulen 51, 52 und/oder 55 induzieren in den Schlitzscheiben 21, 22 die bereits erwähnten Wirbelströme.

Dabei wird in Abhängigkeit von den Schlitzbreiten bzw. der Öffnungen in den Schlitzscheiben die Eigeninduktivität der Spulen 51, 52 durch die Wirbelströme in den Scheiben 51, 52 verändert.

Bei einer Torsionsbeanspruchung des Torsionselements 30 durch ein anliegendes Drehmoment kommt es zu der bereits erwähnten Relativdrehbewegung der beiden Schlitzscheiben 21, 22 und damit zu einer Änderung der Schlitzbreiten bzw. der Induktivität in Abhängigkeit vom Drehmoment.

Hierdurch kann das Drehmoment detektiert werden.

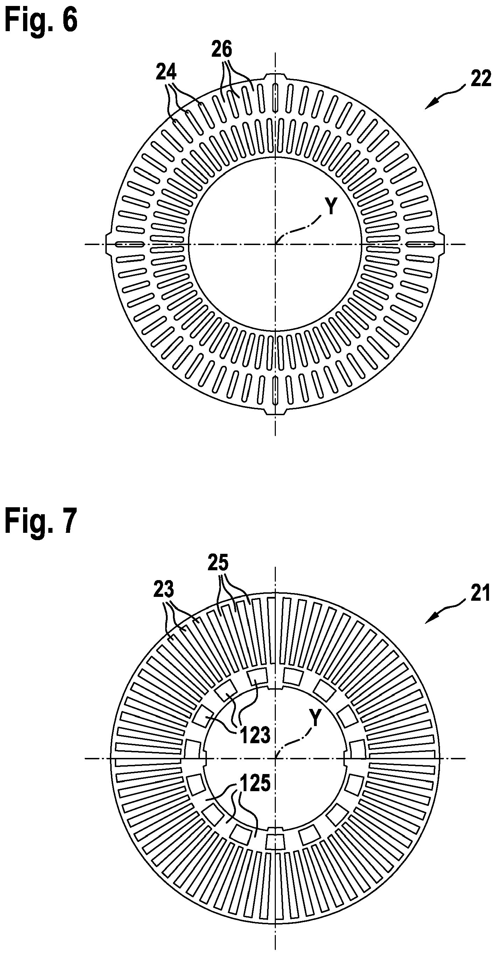

In den Figuren 6 und 7 ist für das Beispiel eBike ein Schlitzscheibenlayout dargestellt.

Die Schlitzscheiben 21, 22 können aus einem Aluminiumblech gefertigt sein und sind hintereinandergelegt angeordnet.

Die Schlitzscheiben 21, 22 können auch aus Kupfer bzw. aus vollflächigen FR4-Platten - zum Beispiel aus Epoxidharz und Glasfasergewebe - und/oder durch einen Platinenherstellungsprozess gefertigt und strukturiert sein.

Dabei können die Schlitzscheiben 21, 22 aus Kupfer jeweils auch auf beiden Seiten der jeweils zu Grunde liegenden Platine ausgebildet sein.

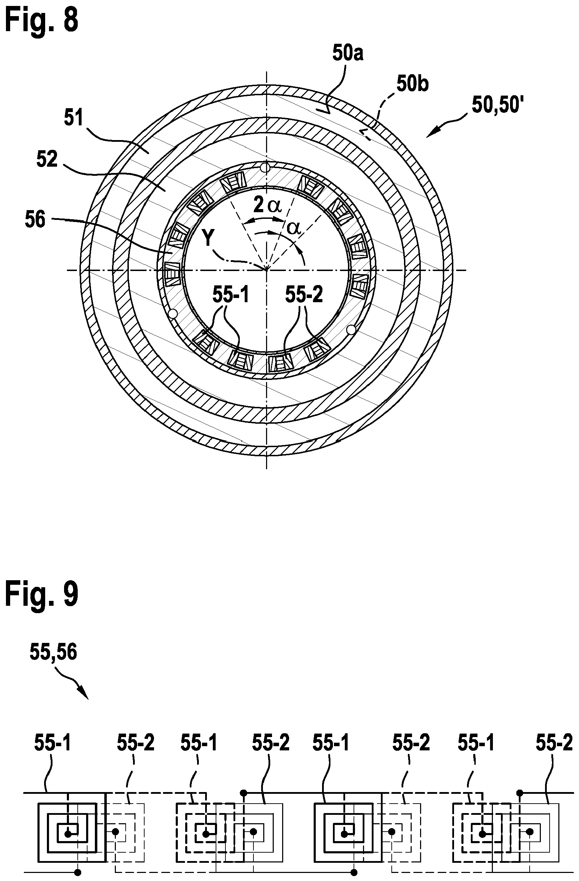

Figur 8 zeigt die Platine zu einer erfindungsgemäß ausgestalteten Wirbelstromsensoreinheit 50, wobei neben den beiden Spulen 51, 52 zur Messung des Torsionswinkels bzw. des Drehmoments, also den zwei Drehmomentspulen, zwei weitere Spuren 55-1, 55-2 einer Spulenanordnung 56 mit in diesem Beispiel jeweils zwölf in Reihe geschalteten einzelnen Spulen 55 für die Drehrichtungs-, Drehwinkel- und/oder Drehzahlerfassung dargestellt sind.

Für diese 24 Spulen 55 der Spulenanordnung 56 für die Drehrichtungs-, Drehwinkel- und/oder Drehzahlerfassung sind innenliegend auf der Schlitzscheibe 21 Öffnungen/Schlitze 123 mit Stegen 125 dazwischen angebracht.

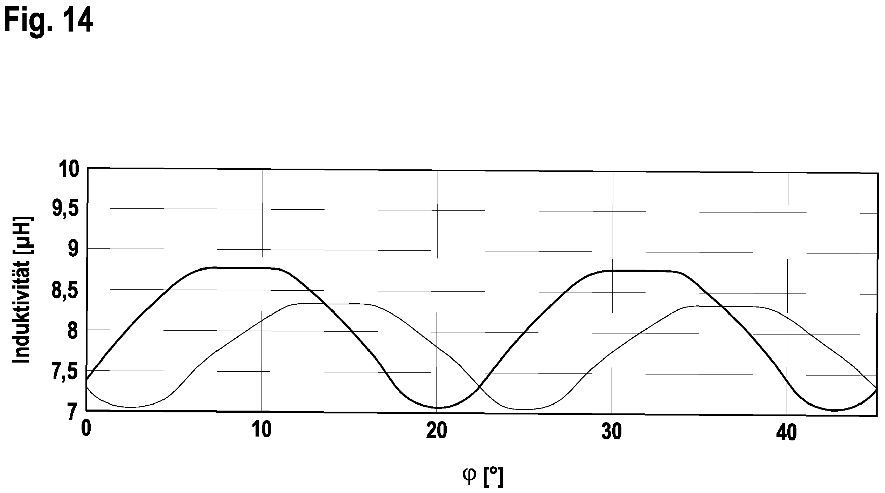

Die Figuren 9 bis 11 zeigen mit abgewickelt dargestellte Spulen 55-1, 55-2 der Spulenanordnung 56 der zwei Spuren die mit Schraffur gekennzeichnete Schlitzscheibe 21. Sie zeigen auch, wie die Öffnungen/Schlitze 123 und Stege 125 der Schlitzscheibe 21 zur Drehrichtungs-, Drehwinkel- und/oder Drehzahlerfassung bei einer Rotation, also in der abgewickelten Form bei Verschiebung, abwechselnd die Spulen 55-1 der Vorderseite 50a und die Spulen 55-2 der Rückseite 50 b der Platine 50'der Wirbelstromsensoreinheit 50 be- und entdämpfen und so ein Sinus-/Kosinussignal generieren, so wie dies im Zusammenhang mit dem Graphen aus Figur 14 dargestellt ist, in welcher die gemessene Induktivität als Funktion des Winkels ϕ der Rotation aufgetragen ist.

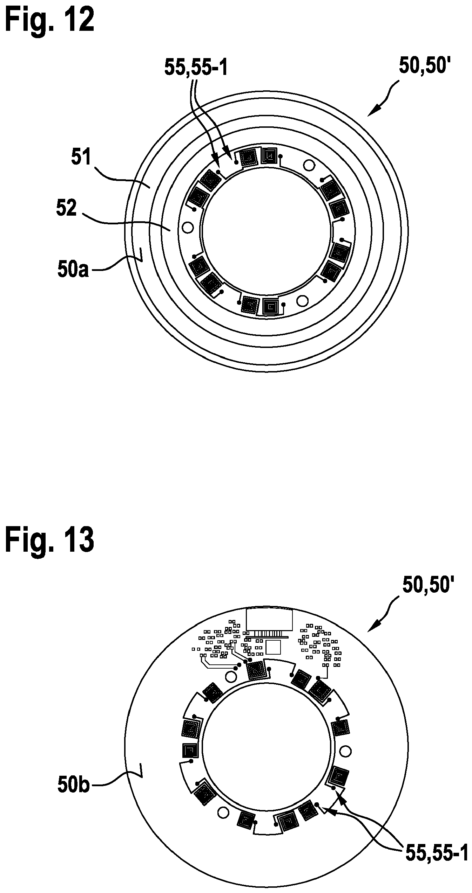

Die Figuren 12 und 13 zeigen das gesamte Layout der Platine 50' der Wirbelstromsensoreinheit 50. Insbesondere ist die Ausrichtung der beiden Indexspuren mit jeweils halb überlappenden Spulen 55-1 auf der Vorderseite 55a und 55-2 auf der Rückseite 55b der Spulenanordnung 56 der Platine 50' dargestellt.

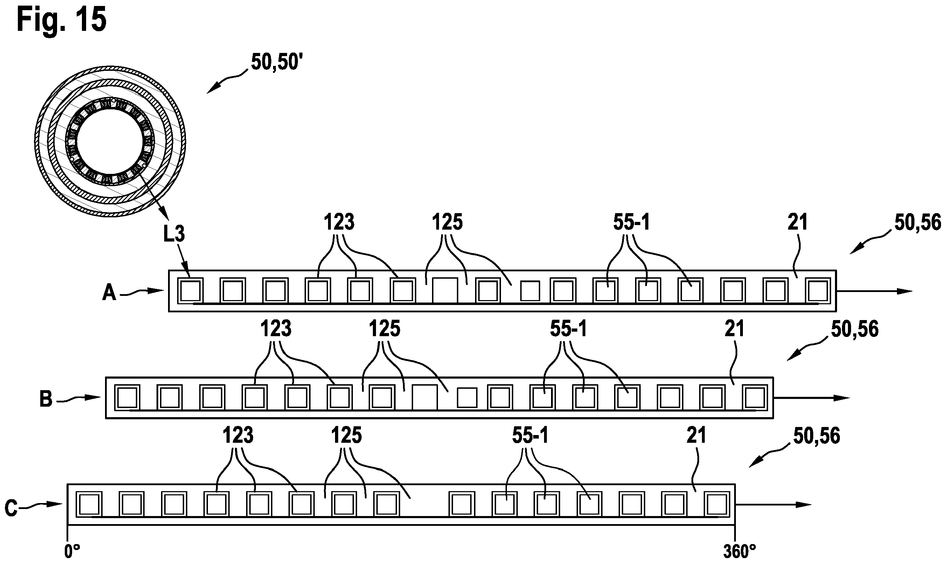

Sind die Öffnungen/Schlitze 123 gemäß Figur 15 derart angeordnet - die Schlitze 123 und die Spulen 55-1, 55-2 sind linear abgewickelt dargestellt - und so ausgebildet, dass diese auf die in Gruppen angebrachten Spulen 55-1, 55-2 den Schlitzen 123 genau gegenüberstehen und diese voll entdämpfen, dann ergibt sich die stärkste Entdämpfung und dass die Position als Winkel 0° angenommen werden kann.

Bei der Spur A fallen 14 von 15 vorhandenen Spulen 55-1 der Spulenanordnung 56 des Wirbelstromsensorelements 55 für die Bestimmung der Drehrichtung, des Drehwinkels und/oder der Drehzahl der Wirbelstromsensoreinheit 50 mit Ausnehmungen oder Schlitzen 123 der Schlitzscheibe 21 zusammen. Für die Induktivität der Spulenanordnung 56 gilt somit L3 = L3ₘₐₓ ·14/15, wenn jede einzelne Spule 55-1 dieselbe Induktivität beiträgt.

Bei der Spur B liegen dieselben Verhältnisse vor wie bei der Spur A.

Bei der Spur C fallen 15 von 15 vorhandenen Spulen 55-1 der Spulenanordnung 56 des Wirbelstromsensorelements 55 für die Bestimmung der Drehrichtung, des Drehwinkels und/oder der Drehzahl der Wirbelstromsensoreinheit 50 mit Ausnehmungen oder Schlitzen 123 der Schlitzscheibe 21 zusammen. Für die Induktivität der Spulenanordnung 56 gilt somit L3 = L3ₘₐₓ ·15/15 = L3ₘₐₓ.

Dies kann sowohl für die Induktivität L3 der Spulen 55-1 auf der Vorderseite 50a der Platine 50' zur Wirbelstromsensoreinheit 50 wie auch für die Induktivität L4 der Spulen 55-2 auf der Rückseite 50 b der Platine 50' zur Wirbelstromsensoreinheit 50 einzeln durchgeführt werden.

Somit kann auch eine absolute Winkeldetektion mit digitalen Schritten durchgeführt werden.

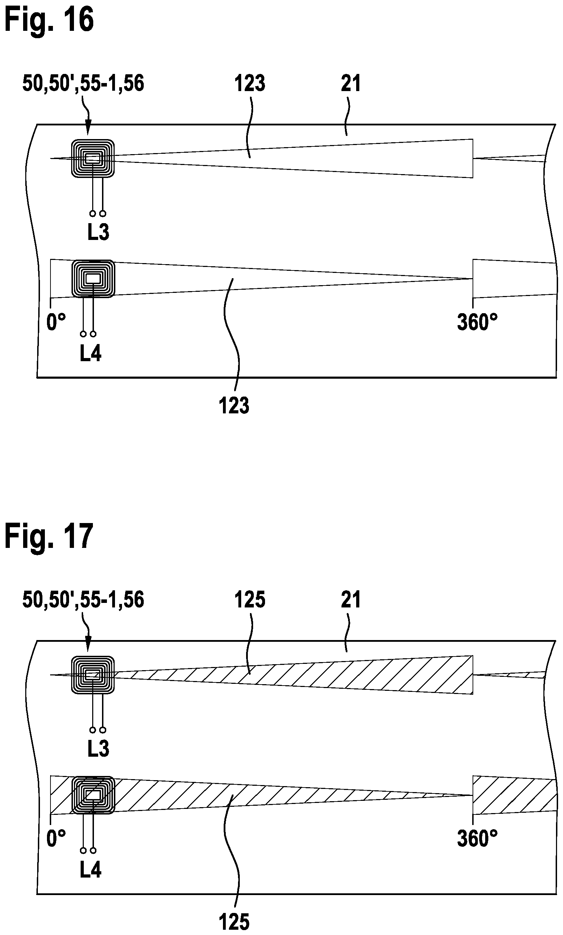

Im Zusammenhang mit den Figuren 16 und 17 sind Anordnungen für eine zweispurige und vollständig analoge Messung des Rotationswinkels anhand zweier abgewickelt dargestellte keilförmiger Schlitze 123 der Schlitzscheibe 21 dargestellt. Hier wird die Induktivität kontinuierlich mit der Spule 55-1 zu der Induktivität L3 gegensinnig zur Spule 55-1 zu der L4 so verändert, dass aus dem Quotienten L3/L4 ein vom Abstand unabhängiger absoluter Drehwinkel ableitbar ist.

Alternativ können anstelle keilförmiger Schlitze 123 auch als keilförmig ausgestaltete Stege oder materielle Bereiche 125 nach Art von Kupferflächen auf einer Platine zur Schlitzscheibe 21 ausgebildet sein, wie dies in Figur 17 dargestellt ist.

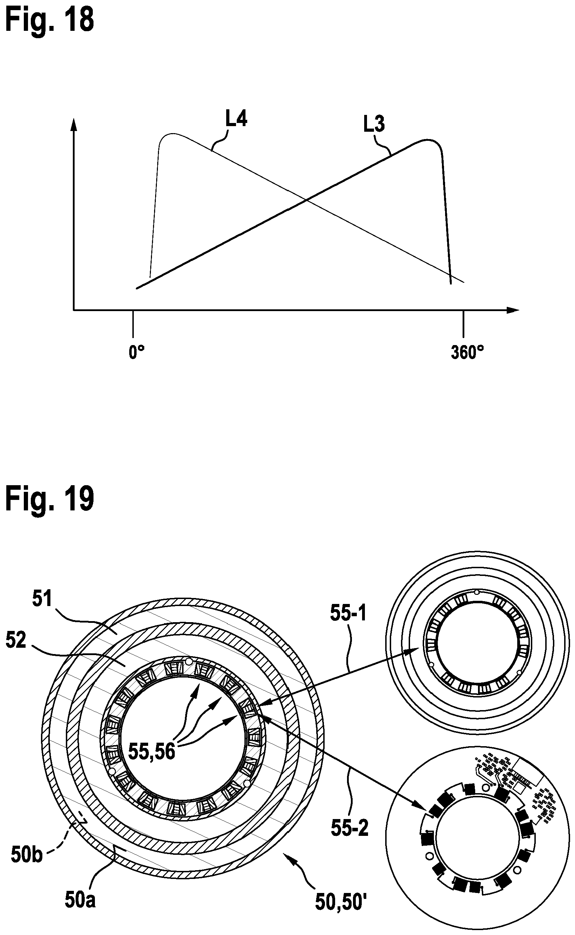

Figur 18 zeigt die Kennlinien der Induktivitäten L3 und L4 für Spulen 55-1, 55-2 auf der Vorderseite 50a bzw. der Rückseite 50b der Platine 50' der Wirbelstromsensoreinheit 50.

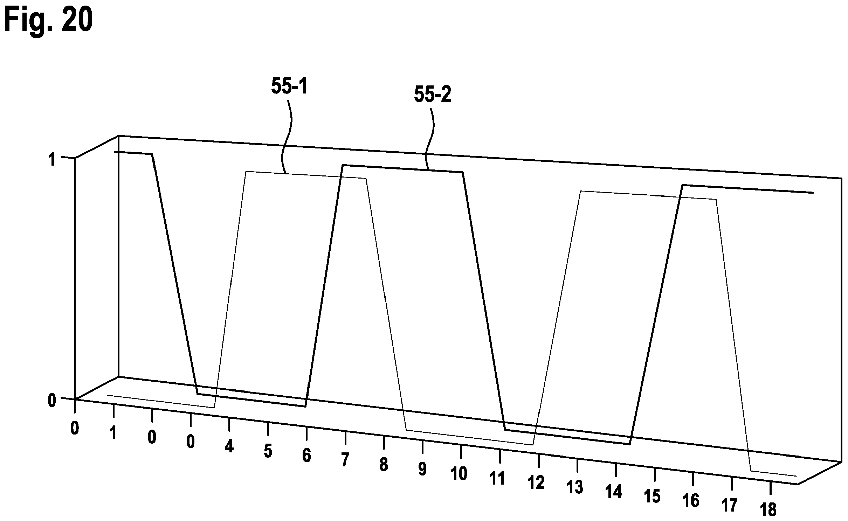

Die Figuren 19 und 20 zeigen eine Ausgestaltungsform der erfindungsgemäßen Wirbelstromsensoreinheit 50 mit ersten und zweiten Spuren auf der Vorderseite 50a der Platine 50', welche ein erstes Wirbelstromsensorelement 51 und ein zweites Wirbelstromsensorelement 52 für die Erfassung eines Drehmoments bilden. Des Weiteren ist eine radial innerste Spur mit der Spulenanordnung 56 für das Wirbelstromsensorelement 55 für die Drehrichtung, den Drehwinkel und/oder die Drehzahl vorgesehen, und zwar mit ersten Spulen 55-1 auf der Vorderseite 50a und mit zweiten Spulen 55-2 auf der Rückseite 50b der Platine 50'.

Die ersten Spulen 55-1 erzeugen somit einen Kanal A für entsprechende Induktionssignale, die zweiten Spulen 55-2 erzeugen einen Kanal B für entsprechende Induktionssignale, wie dies im Zusammenhang mit der Darstellung in Figur 20 illustriert ist.

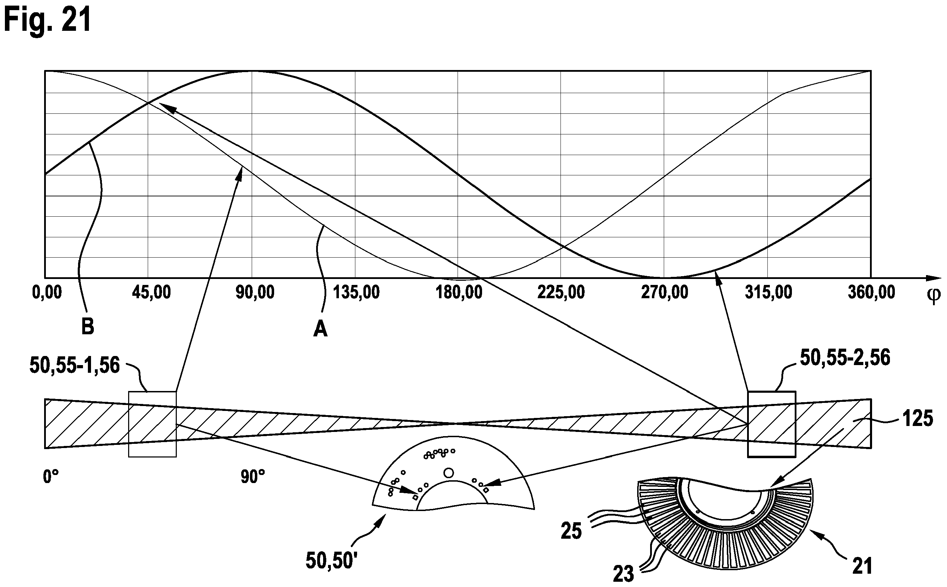

Figur 21 beschreibt eine andere Ausführungsform der vorliegenden Erfindung, bei welcher auf der ersten Schlitzscheibe 21 neben Schlitzen 23 und Stegen 25 für die Drehmomenterfassung, welche radial außenliegend auf der Schlitzscheibe 21 angeordnet sind, radial innen liegend ein materieller Bereich 125 als keilförmiger Steg ausgebildet ist, welcher radial umläuft und somit ein Winkelbereich von 0° bis 360° codiert. Der Graph mit den Spuren A und B illustriert wiederum eine hier kontinuierlich auftretende Bedämpfung zweier Spulen 55-1, 55-2 der Spulenanordnung 56 für das Wirbelstromsensorelement 55 für die Drehrichtung, den Drehwinkel und/oder die Drehzahl, welche auf der Vorderseite 50a bzw. auf der Rückseite 50b der Platine 50' der Wirbelstromsensoreinheit 50 angeordnet sind.

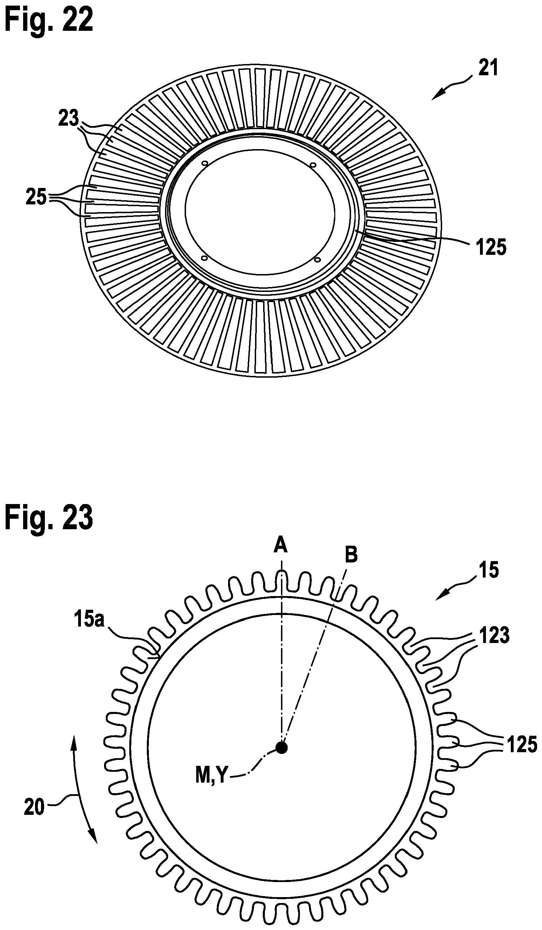

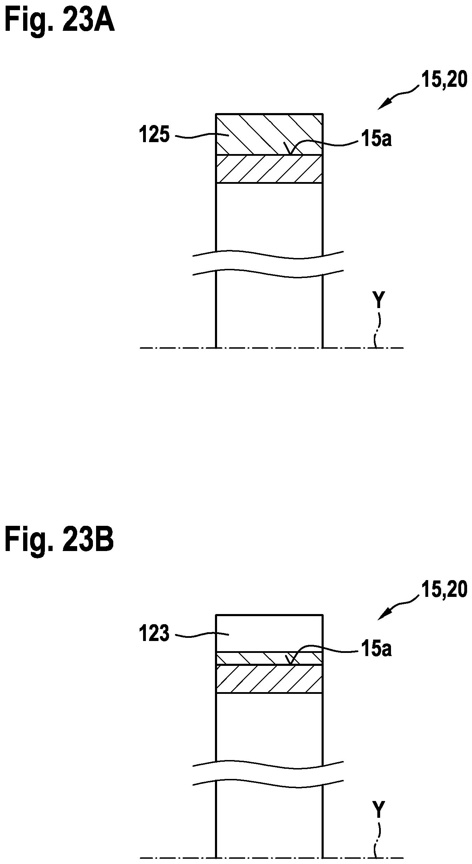

Die bei dieser Ausführungsform verwendete Schlitzscheibe 21 mit dem radial innen umlaufenden keilförmigen Steg 125 ist noch einmal im Detail in Figur 22 illustriert.

Die Figuren 23 bis 23B illustrieren eine alternative Ausführungsform der Erfindung, bei welcher das Wirbelstromelement 20 als Abfolge von Erhebungen 125 und Vertiefungen 123 eines leitfähigen Materials nach Art eines Zahnrads auf der Oberfläche 15a der Welle 15 ausgebildet ist. Dabei sind axiale Schnitte durch die Welle 15 mit der Rotationsachse Y entlang der Linien oder Ebenen MA und MB in den Figuren 23A und 23B dargestellt.

## Patentansprüche

1. Drehwerterfassungseinrichtung (100), welche eingerichtet ist, als Drehrichtungs-, Drehwinkel- und/oder Drehzahlerfassungseinrichtung eine Drehrichtung, einen Drehwinkel und/oder eine Drehzahl einer Welle (15) und insbesondere einer Kurbelwelle (15) einer mit Muskelkraft und/oder oder mit Motorkraft antreibbaren Arbeitsvorrichtung und insbesondere eines Fahrzeugs (1) um eine Rotationsachse (Y) berührungslos zu erfassen,
mit:
- einem Wirbelstromelement (20), in welchem von einer Drehrichtung, einem Drehwinkel und/oder einer Drehzahl der Welle (15) abhängige elektrische Wirbelströme generierbar sind, und
- einer Wirbelstromsensoreinheit (50) zur Erfassung von im Wirbelstromelement (20) generierten elektrischen Wirbelströmen.

2. Drehwerterfassungseinrichtung (100) nach Anspruch 1, bei welcher das Wirbelstromelement (20) drehfest mit der Welle (15), mechanisch zwischen einer Antriebsseite und einer Abtriebsseite der Welle (15) und/oder eines Torsionselements (30) der Welle (15) und/oder drehfest mit dem Torsionselement (30) koppelbar oder gekoppelt ist.

3. Drehwerterfassungseinrichtung (100) nach einem der vorangehenden Ansprüche,
- bei welcher das Wirbelstromelement (20) in Bezug auf die Rotationsachse (Y) der Welle (15) in Umfangsrichtung eine Abfolge materieller Bereiche (123, 125) zur Erzeugung elektrischer Wirbelströme aufweist,
- wobei die materiellen Bereiche (123, 125) zur Erzeugung elektrischer Wirbelströme insbesondere
- unterschiedlich und/oder zur Erzeugung unterschiedlicher elektrischer Wirbelströme,
- als ein oder mehrere diskrete materielle Abschnitte, Stege (125), Schlitze (123) und/oder Ausnehmungen,
- als ein oder mehrere in Umfangsrichtung angeordnete und/oder kontinuierlich verlaufende materielle Abschnitte
- als ein oder mehrere sich in ihrer Geometrie in Umfangsrichtung, in axialer Richtung und/oder in radialer Richtung - insbesondere kontinuierlich - ändernde materielle Abschnitte,
- als ein oder mehrere sich in ihrer materiellen Zusammensetzung in Umfangsrichtung, in axialer Richtung und/oder in radialer Richtung - insbesondere kontinuierlich - ändernde materielle Abschnitte und/oder
- als ein oder mehrere keilförmigen Abschnitte, deren laterale Ausdehnung in axialer Richtung zur Richtung der Rotationsachse (Y) sich in Umfangsrichtung diskret, kontinuierlich und/oder abschnittsweise kontinuierlich ändert,
ausgebildet sind.

4. Drehwerterfassungseinrichtung (100) nach einem der vorangehenden Ansprüche, bei welcher das Wirbelstromelement (20) eine Scheibe (21) und/oder eine Kreisscheibe ist oder aufweist, welche
- konzentrisch und koaxial zur Welle (15) angeordnet ist,
- mit oder aus einem elektrisch leitfähigen Material, einem metallischen Material, einem Metall, Aluminium und/oder Kupfer gebildet ist,
- aus einem elektrisch nicht leitfähigen Material besteht, wobei auf einer Oberfläche Abschnitte eines elektrisch leitfähigen Materials, eines metallischen Materials, eines Metalls, aus Aluminium und/oder aus Kupfer angeordnet sind,
- als eine erste Schlitzscheibe (21) mit Schlitzen (23, 123) und Stegen (25, 125) und/oder
- als eine Platine oder nach Art einer Platine ausgebildet ist, und/oder
- bei welcher jeweilige Stege (25, 125) einer Schlitzscheibe (21) als Platine als flach strukturierte Elemente eines elektrisch leitfähigen Materials auf mindestens einer Seite der Platine und Schlitze (23, 123) als im Vergleich zu den Stegen (25, 125) elektrisch nicht oder schlecht leitfähige Bereiche auf der mindestens einen Seite der Platine ausgebildet sind.

5. Drehwerterfassungseinrichtung (100) nach einem der vorangehenden Ansprüche,
- welche zusätzlich eingerichtet ist, als Drehmomenterfassungseinrichtung ein auf eine Welle (15) und insbesondere auf eine Kurbelwelle (15) einer mit Muskelkraft und/oder oder mit Motorkraft antreibbaren Arbeitsvorrichtung und insbesondere eines Fahrzeuges (1) entlang einer Rotationsachse (Y) wirkendes Drehmoment (M) zu erfassen,
- wobei im Wirbelstromelement (20) vom Drehmoment zwischen der Antriebsseite und der Abtriebsseite abhängige elektrische Wirbelströme generierbar sind.

6. Drehwerterfassungseinrichtung (100) nach einem der vorangehenden Ansprüche, bei welcher
- das Wirbelstromelement (20) eine erste Schlitzscheibe (21) mit Schlitzen (23) und Stegen (25) als die erste Scheibe (21) und eine zweite Schlitzscheibe (22) mit Schlitzen (24) und Stegen (26) aufweist,
- die Schlitzscheiben (21, 22) vollständig mit oder aus Metall, zum Beispiel mit oder aus Aluminium und/oder Kupfer oder als Platinen oder nach Art von Platinen ausgebildet sind und/oder
- die Stege (25, 26) der Schlitzscheiben (21, 22) als flach strukturierte Elemente eines elektrisch leitfähigen Materials auf mindestens einer Seite einer jeweiligen Platine und die Schlitze (23, 24) als im Vergleich zu den Stegen (25, 26) elektrisch nicht oder schlecht leitfähige Bereiche auf der mindestens einen Seite einer jeweiligen Platine ausgebildet sind.

7. Drehwerterfassungseinrichtung (100), welche eingerichtet ist, als Drehmomenterfassungseinrichtung ein auf eine Welle (15) und insbesondere auf eine Kurbelwelle (15) einer mit Muskelkraft und/oder oder mit Motorkraft antreibbaren Arbeitsvorrichtung und insbesondere eines Fahrzeuges (1) entlang einer Rotationsachse (Y) wirkendes Drehmoment (M) zu erfassen,
mit:
- einem Wirbelstromelement (20), in welchem vom Drehmoment zwischen der Antriebsseite und der Abtriebsseite abhängige elektrische Wirbelströme generierbar sind, und
- einer Wirbelstromsensoreinheit (50) zur Erfassung von im Wirbelstromelement (20) generierten elektrischen Wirbelströmen, bei welcher
- das Wirbelstromelement (20) eine erste Schlitzscheibe (21) mit Schlitzen (23) und Stegen (25) und eine zweite Schlitzscheibe (22) mit Schlitzen (24) und Stegen (26) aufweist,
- die Schlitzscheiben (21, 22) als Platinen oder nach Art von Platinen ausgebildet sind und
- die Stege (25, 26) der Schlitzscheiben (21, 22) als flach strukturierte Elemente eines elektrisch leitfähigen Materials auf mindestens einer Seite einer jeweiligen Platine und die Schlitze (23, 24) als im Vergleich zu den Stegen (25, 26) elektrisch nicht oder schlecht leitfähige Bereiche auf der mindestens einen Seite einer jeweiligen Platine ausgebildet sind.

8. Drehwerterfassungseinrichtung (100) nach einem der vorangehenden Ansprüche, bei welcher
- jeweilige materielle Bereiche (123, 125), Stege (25, 26, 125) und/oder Schlitze (23, 24, 123) auf beiden Seiten einer jeweiligen Platine,
- jeweilige materielle Bereiche (123, 125), Stege (25, 26, 125) und/oder Schlitze (23, 24, 123) als auf einer jeweiligen Seite einer jeweiligen Platine gefräste, fotolithografisch gebildete, geätzte und/oder gedruckte Elemente,
- jeweilige materielle Bereiche (125) und/oder Stege (25, 26, 125) mit oder aus einem metallischen Material, einem Metall und/oder Kupfer und/oder
- jeweilige materielle Bereiche (123) und/oder Schlitze (23, 24, 123) als Ausnehmungen in einem elektrisch leitfähigen Material und/oder im Material der Stege (25, 26, 124) und/oder als Bereiche aus einem im Vergleich zum Material der Stege (25, 26, 125) elektrisch nicht oder schlechter leitenden Material, insbesondere benachbart zu einem elektrisch leitenden Material der Stege (25, 26),
ausgebildet sind.

9. Drehwerterfassungseinrichtung (100) nach einem der Ansprüche 6 bis 8, bei welcher
- jeweilige Schlitzscheiben (21, 22) als konzentrisch zueinander angeordnete und/oder sich nicht direkt berührende oder sich berührende Kreisscheiben ausgebildet sind,
- eine erste Schlitzscheibe (21) mechanisch mit einer der Antriebsseite und der Abtriebsseite und eine zweite Schlitzscheibe (22) mechanisch mit der anderen der Antriebsseite und der Abtriebsseite der Welle (15) oder des Torsionselements (30) der Welle (15) koppelbar oder gekoppelt ist und/oder
- die Schlitzscheiben (21, 22) in Abhängigkeit vom Drehmoment gegeneinander verdrehbar sind, um ein oder mehrere in Abhängigkeit von der gegenseitigen Verdrehung verschiedengradig überdeckte Anordnungen von Schlitzen (23, 24) und Stegen (25, 26) auszubilden, welche insbesondere im Bereich verschiedener radialer Abstände von einem Zentrum der Schlitzscheiben (21, 22) ausbildbar sind.

10. Drehwerterfassungseinrichtung (100) nach einem der vorangehenden Ansprüche, bei welcher die Wirbelstromsensoreinheit (50) eingerichtet ist, ein magnetisches Wechselfeld zu erzeugen, dem Wirbelstromelement (20) aufzuprägen und im Wirbelstromelement (20) generierte Wirbelströme und/oder Werte zu mindestens einer dafür repräsentativen Messgröße zu erfassen.

11. Drehwerterfassungseinrichtung (100) nach einem der vorangehenden Ansprüche, bei welcher
- die Wirbelstromsensoreinheit (50) ein oder mehrere Wirbelstromsensorelemente (51, 52, 55) - insbesondere in Form von Erreger- und/oder Messspulen - aufweist und
- jedes Wirbelstromsensorelement (51, 52, 55) insbesondere jeweils einer bestimmten Anordnung von materiellen Bereichen (123, 125), Schlitzen (23, 24) und/oder Stegen (25, 26) der Schlitzscheiben (21, 22) zugeordnet ist.

12. Drehwerterfassungseinrichtung (100) nach einem der vorangehenden Ansprüche, bei welcher die Wirbelstromsensoreinheit (50) und insbesondere das eine oder die mehreren Wirbelstromsensorelemente (51, 52, 55)
- als flach strukturierte Kupferelemente und/oder als auf einer Platine strukturierte oder gedruckte Elemente ausgebildet sind und/oder
- mechanisch vom Wirbelstromelement (20), der Welle (15) und einem etwaigen Torsionselement (30) entkoppelt sind und/oder
- in einem Gehäuse, insbesondere einem Kurbelgehäuse (14) eines Tretlagers ortsfest montiert sind.

13. Antrieb (80) für ein mit Muskelkraft und/oder oder mit Motorkraft antreibbares Fahrzeug (1), insbesondere Fahrrad, Elektrofahrrad, eBike, Pedelec oder dergleichen,
- mit einer Drehwerterfassungseinrichtung (100) nach einem der Ansprüche 1 bis 12 zur Erfassung mindestens eines Drehwerts einer Welle (15) des Antriebs (80), insbesondere eines auf die Welle (15) wirkenden Drehmomentes, einer Drehrichtung, eines Drehwinkels und/oder einer Drehzahl,
- bei welchem insbesondere auf der Grundlage des mindestens einen erfassten Drehwerts der Antrieb (80) überwachbar und/oder steuerbar ist.

14. Antrieb (80) nach Anspruch 13,
bei welchem das Torsionselement (30) ein kraft- und/oder drehmomentübertragendes Element, ein Antriebselement und/oder ein Abtriebselement ist oder aufweist, insbesondere ein Zahnrad, einen Planetensteg (41), einen Planetenträger (41) eines Planetengetriebes oder dergleichen.

15. Mit Muskelkraft und/oder oder mit Motorkraft antreibbare Arbeitsvorrichtung, Fahrzeug (1), Fahrrad, Elektrofahrrad, eBike und/oder Pedelec, mit:
- mindestens einem antreibbaren Element oder Rad (9-1, 9-2),
- einem Antrieb (80) nach Anspruch 13 oder 14 zum Antreiben des mindestens einen antreibbaren Elements oder Rads (9-1, 9-2), bei welchem auf der Grundlage des mindestens einen erfassten Drehwerts der Antrieb (80) überwachbar und/oder steuerbar ist.
